Europäisches Patentamt

European Patent Office

Office européen des brevets

(11) Numéro de publication : **0 287 417 B1**

# FASCICULE DE BREVET EUROPEEN

(45) Date de publication du fascicule du brevet :
**18.03.92 Bulletin 92/12**

(51) Int. Cl.⁵ : **G06K 7/06,** G06K 13/08

(21) Numéro de dépôt : **88400743.6**

(22) Date de dépôt : **28.03.88**

(54) **Dispositif de lecture/écriture pour cartes à mémoire électronique protégé contre le vandalisme.**

Demande divisionnaire 91201606.0 déposée le 28/03/88.

(30) Priorité : **09.04.87 FR 8704992**
**22.10.87 FR 8714601**

(43) Date de publication de la demande :
**19.10.88 Bulletin 88/42**

(45) Mention de la délivrance du brevet :
**18.03.92 Bulletin 92/12**

(84) Etats contractants désignés :
**BE CH DE ES GB IT LI NL SE**

(56) Documents cités :
**EP-A- 0 134 110**
**EP-A- 0 167 356**
**EP-A- 0 190 527**
**DE-A- 3 402 632**
**DE-A- 3 445 185**

(56) Documents cités :
**DE-A- 3 602 668**
**FR-A- 2 445 560**
**FR-A- 2 477 303**
**FR-A- 2 587 132**
**PA-T-EN T A BST**
**PA-T-EN T A BST**
**PA-T-EN T A BST**

(73) Titulaire : **SCHLUMBERGER INDUSTRIES**
**50, avenue Jean Jaurès**
**F-92120 Montrouge (FR)**

(72) Inventeur : **Paumard, Maurice**
**14, rue Exelmans**
**F-78140 Vélizy (FR)**
Inventeur : **Langlais, Joel**
**36, rue Léon Mauge**
**F-91370 Verrières (FR)**

(74) Mandataire : **Hasenrader, Hubert et al**
**Cabinet BEAU DE LOMENIE 55, rue d'Amsterdam**
**F-75008 Paris (FR)**

## Description

La présente invention concerne un dispositif de lecture/écriture pour cartes à mémoire électronique protégé contre le vandalisme.

Les cartes à mémoire électronique sont maintenant bien connues. Une telle carte se compose essentiellement d'un corps de carte de forme générale rectangulaire dans lequel est implanté un module électronique. Le module électronique comprend un circuit intégré comportant au moins un circuit mémoire et des plages externes de contact électrique qui sont reliées aux bornes du circuit intégré. Pour exploiter une telle carte on introduit celle-ci dans une machine de traitement. La machine de traitement comprend des circuits de traitement pour exploiter les informations contenues dans la mémoire de la carte et pour modifier ces informations et un dispositif de lecture/écriture qui permet d'assurer une connexion électrique temporaire entre les plages de contact de la carte et les circuits de traitement de la machine. L'établissement de cette connexion sert à alimenter le circuit intégré de la carte, à transmettre les instructions d'écriture/lecture de la mémoire de la carte, à appliquer la tension d'écriture et un signal d'horloge etc...

Un dispositif de lecture/écriture comprend habituellement un boitier qui comporte sur sa face avant une fente d'introduction de la carte et qui définit intérieurement un couloir de guidage servant à positionner la carte de telle manière que, lorsque celle-ci est en position de traitement, c'est-à-dire en position enfoncée, les plages de contact de la carte soient en contact électrique avec un connecteur qui est monté dans le couloir de guidage. En ce qui concerne les cartes à mémoire selon la norme ISO, les plages de contact sont disposées à proximité d'un coin du corps de la carte. Le connecteur du dispositif de lecture/écriture est donc excentré par rapport au plan médian du dispositif de lecture/écriture.

Il existe plusieurs types de dispositif de lecture/écriture. Dans certains d'entre eux la carte ne pénètre que partiellement dans le couloir de guidage lorsqu'elle est amenée en position de traitement, le déplacement de la carte pouvant être effectué, soit manuellement par l'usager, soit par un moteur entraînant un galet. Le dispositif est alors dit "sans avalement". Dans d'autres dispositifs de lecture/écriture la carte pénêtre entièrement dans le couloir de guidage pour arriver en position de traitement, le déplacement de la carte dans les deux sens, étant obtenu par un moteur d'entraînement. Avec le deuxième type de dispositif, qui est dit "à avalement", on est sûr que le détenteur de la carte ne déplacera pas sa carte pendant le traitement de celle-ci. En revanche si les moyens de déplacement de la carte deviennent défaillants, la carte reste bloquée dans le couloir de guidage ce qui est dommageable pour le titulaire de la carte et pour la société gérant le dispositif de lecture/écriture puisque celle-ci devient inutilisable jusqu'à ce qu'on ait procédé à sa réparation.

En outre beaucoup d'usagers voient avec réticence leur carte entièrement avalée par le dispositif de lecture. Avec le premier type de dispositif de lecture/écriture ce risque et cette crainte n'existent pas puisqu'une partie du corps de la carte fait toujours saillie à l'extérieur du lecteur de cartes. Cependant les deux types de dispositifs de lecture/écriture peuvent faire l'objet d'actes de malveillance visant à en interdire le fonctionnement. Un de ces actes les plus fréquents consiste dans l'introduction dans le couloir du guidage du dispositif de lecture/écriture d'une partie d'un corps de carte authentique mais qui a été coupé de telle manière que sa longueur soit un peu inférieure à la longueur du couloir de guidage, dans le cas d'un lecteur du premier type, et un peu inférieure à la course de la carte dans le cas d'un lecteur du deuxième type. Dans les deux cas les usagers se présentant après l'accomplissement de cet acte de malveillance ne pourront pas utiliser le dispositif de lecture/écriture puisque la portion de corps de carte ne peut pas être extraite du couloir de guidage. Cela nécessite l'intervention d'une équipe de maintenance et interdit le fonctionnement du dispositif de lecture/écriture pour un temps non négligeable.

Une autre forme de vandalisme consiste à détériorer les contacts électriques de la tête de lecture/écriture du dispositif. Pour cela, il suffit de faire pénétrer dans la fente d'introduction, à la place d'une carte, une lame métallique ou un objet similaire, et de briser ou de déformer les contacts électriques. En effet, le plus souvent, ceux-ci font saillie dans le couloir de guidage.

Le document FR-A-2 587 132 décrit un lecteur mixte muni d'un dispositif de confiscation de cartes. Cependant, le dispositif de confiscation est inopérant pour empêcher le type de vandalisme décrit ci-dessus.

Le document EP-A-0 190 527 décrit un connecteur pour cartes à mémoire électronique. Les cartes sont guidées par des glissières qui comportent une partie évasée à proximité de la fente d'introduction pour faciliter l'introduction de la carte dans le lecteur.

Un objet de l'invention est de fournir un dispositif de lecture/écriture pour cartes à mémoire électronique qui permette d'empêcher ces actes de vandalisme ou du moins de les rendre plus difficiles.

Pour atteindre ce but, l'invention concerne un dispositif de lecture/écriture pour des cartes à mémoire électronique comprenant un corps de carte et des plages de contact électrique disposées dans une des faces principales dudit corps de carte, ledit dispositif comprenant un boîtier muni d'une ouverture frontale pour permettre l'introduction de ladite carte dans ledit boîtier ; une tête de lecture/écriture comprenant des éléments de connexion disposée à l'intérieur dudit boîtier ; des moyens de guidage de ladite carte pour guider celle-ci entre ladite ouverture frontale et une position de traitement dans laquelle lesdites plages de contact sont aptes à entrer en contact avec lesdits éléments de connexion de ladite tête de lecture/écriture ; caractérisé en ce qu'il comporte en outre : une cloison du boîtier, ayant en coupe horizontale une forme présentant au moins une partie non perpendiculaire à la direction d'introduction de la carte, présentant une fente horizontale permettant de maintenir la portion dudit corps de carte comportant lesdites plages de contact lorsque ladite carte est en position de traitement, par quoi lesdites plages de contact sont appliquées contre lesdits éléments de connexion de la tête de lecture/écriture ; ladite tête de lecture étant disposée à l'extérieur du boîtier derrière ladite cloison suivant la direction d'introduction de la carte, l'ouverture frontale du boîtier ayant des dimensions telles que la région devant la fente soit accesible par l'utilisateur et le passage d'un objet dans la région derrière la fente n'étant obstrué par aucune butée mécanique.

Selon un mode particulier de réalisation du premier mode de mise en oeuvre, le dispositif de lecture/écriture comprend des moyens pour communiquer un mouvement relatif entre ledit boîtier et ladite tête de lecture/écriture entre une première position où ladite tête de lecture n'est pas apte à entrer en contact avec ladite carte, et une deuxième position ou ladite tête de lecture/écriture est apte à entrer en contact avec ladite tête, lesdits moyens de déplacement n'étant commandés pour amener ladite tête dans ladite deuxième position que lorsque ladite carte est en position de traitement.

L'invention sera mieux comprise à la lecture de la description qui suit de plusieurs modes de mise en oeuvre de l'invention donnés à titre d'exemples non limitatifs.

La description se réfère au dessin annexé sur lequel :

La figure 1 est une vue en perspective d'un premier mode de réalisation du dispositif de lecture/écriture.

Les figures 2a et 2b sont des vues, partiellement écorchées, respectivement de dessus et de droite d'une première variante de mise en oeuvre du dispositif de la figure 1.

La figure 3 est une vue de droite, partiellement écorchée, d'une deuxième variante de mise en oeuvre du dispositif de la figure 1.

Les figures 4a et 4b sont des vues respectivement de droite et de dessus d'un deuxième mode de mise en oeuvre du dispositif de lecture/écriture.

La figure 5 est une vue en perspective d'un troisième mode de réalisation du dispositif de lecture/écriture ; et

Les figures 6a et 6b sont des vues, partiellement écorchées, respectivement de dessus et de droite du troisième mode de mise en oeuvre du dispositif de la figure 5.

Dans la suite de la description on appelera "lecteur de cartes" le dispositif de lecture et/ou d'écriture pour cartes à mémoire électronique.

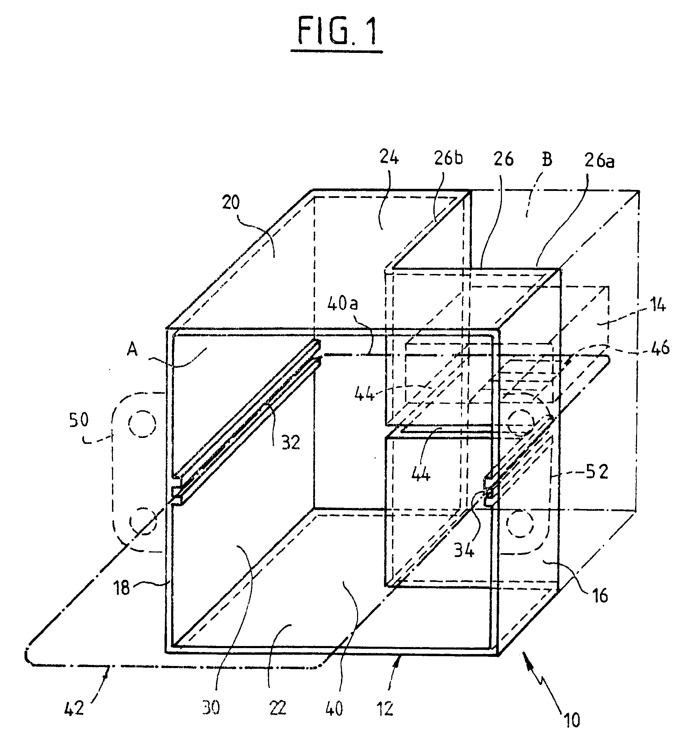

La figure 1 montre la structure générale d'un lecteur de cartes 10 selon l'invention. Le lecteur 10 comprend un boîtier 12 et une tête de lecture/écriture 14 représentée schématiquement en pointillés sur la figure 1. Le boîtier 12 comprend deux parois latérales 16 et 18, verticales sur la figure 1, une paroi supérieure 20 et une paroi inférieure 22, et une paroi postérieure 24. Le boîtier 12 comprend encore une cloison 26 verticale sur la figure 1, qui s'étend de la paroi supérieure 20 à la paroi inférieure 22. La cloison 26 a, en coupe horizontale, la forme d'un L. La cloison 26 est ainsi formée par deux demi-cloisons 26a, raccordée à la paroi latérale 16, et 26b, raccordée à la paroi postérieure 24. Les bords avant des parois 16, 18, 20 et 22 limite une ouverture frontale 30 de forme rectangulaire.

La cloison 26 sépare l'intérieur du boitier 12 en deux régions : une région avant A qui prolonge l'ouverture frontale 30 et une région arrière B quine communique pas avec l'ouverture 30. Comme le montre la figure 1, la paroi latérale 16 et la paroi postérieure 24 ne se prolongent pas au delà de la cloison 26. Il en va de même des parois supérieure et inférieure 24 et 22. Ainsi la région B n'est limitée que par les cloisons 26a et 26b. On a représenté en traits mixtes les prolongements "fictifs" des parois 24 et 16 dans la région B.

Si l'on revient à la région A, on voit que les faces internes des parois latérales 16 et 18 sont munies de glissières 32 et 34 qui sont disposées dans un même plan horizontal. Comme le montre la figure 1, les glissières 32 et 34 servent à guider horizontalement le corps 40 d'une carte à mémoire électronique 42. Les cloisons 26a et 26b sont munies d'une fente horizontale 44 qui est disposée dans le plan horizontal défini par les glissières 32 et 34. La fente 44 a une hauteur légèrement supérieure à l'épaisseur $e$ du corps de carte. Comme cela est bien connu, la carte est munie de plages de contact électrique 46. Il y en a huit sur la figure 1. Les plages de contact 46 sont disposées dans un "coin" du corps de carte 40. La tête de lecture 14, qui sera décrite plus en détails ultérieurement est disposée dans la région B.

Enfin le boîtier 12 comporte deux oreilles 50 et 52 pour la fixation du boitier 12 sur la machine dont fait partie le lecteur.

Lorsqu'un usager veut utiliser la machine qui est équipée du lecteur de cartes 10, il introduit sa carte 42 dans les glissières 32 et 34 par l'ouverture frontale 30, les plages de contact 46 étant disposées en avant et dans la face supérieure du corps de carte 40. L'usager pousse la carte 42 qui est guidée par les glissières 32 et 34. L'extrémité droit du corps de carte pénètre dans la fente 44 de la cloison 26. La carte est poussée jusqu'à ce que son bord avant 40a arrive en butée sur la paroi postérieure 24. Dans cette situation, la carte est en position de traitement.

Il faut remarquer que la portion du corps de carte qui comporte les plages de contact électrique est situé dans la région B du boitier où se trouve la tête de lecture. Cette partie de la carte est bien maintenue en position dans la direction verticale par les lèvres de la fente 44. Il est avantageux de prévoir que les demi-cloisons 26a et 26b soient proches de la périphérie des plages de contact électrique pour assurer un meilleur maintien.

L'examen de la figure 1 montre que le lecteur est insensible aux actes de vandalismes consistant à introduire un objet dans le lecteur pour empêcher l'introduction ultérieure d'une carte à mémoire. En effet, tout objet dont une partie est située dans la région avant A peut aisément être extrait du lecteur par l'utilisateur du fait que la distance séparant les parois supérieure 20 et inférieure 22 est suffisante pour pouvoir en extraire tout objet. Si l'on tente d'introduire un objet dans la région B, cet objet sera automatiquement éjecté lors de l'introduction d'une carte normale puisque la région B ne comporte ni fond, ni butée mécanique dans la direction d'introduction de la carte.

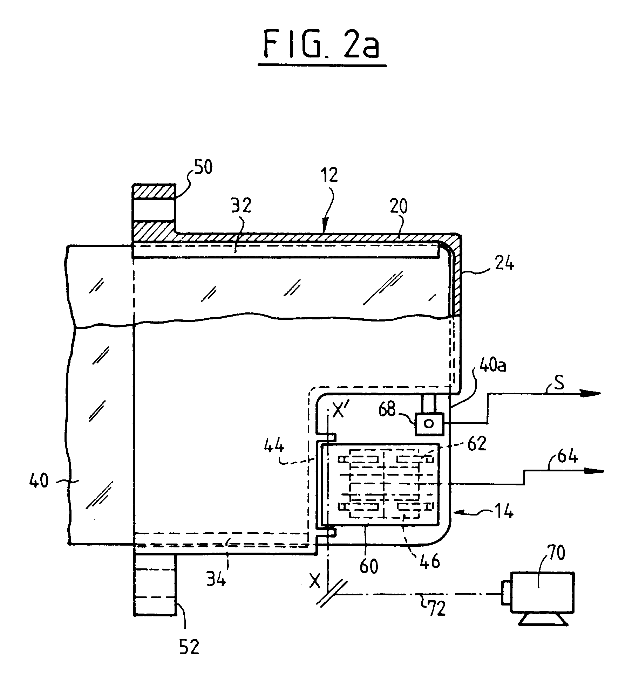

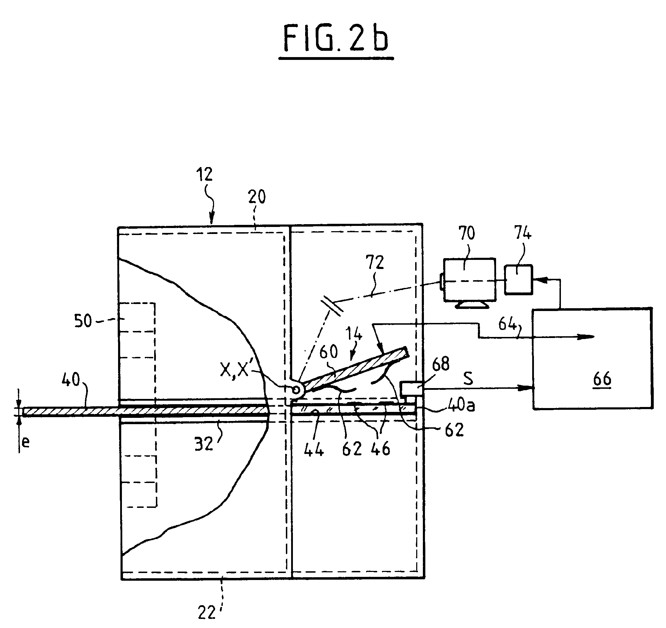

Les figures 2a et 2b reprennent le lecteur de cartes de la figure 1 mais en précisant la structure de la tête de lecture 14 qui est disposée dans la région arrière B du boitier 12. La tête de lecture 14 est formée par un support isolant 60 sur lequel sont montées des lames élastiques conductrices telles que 62. Le nombre de ces lames 62 est égal au nombre de plages de contact électrique 46 et leurs extrémités libres présentent la même géométrie que les plages de contact. Sur le support isolant 60 sont réalisés des pistes conductrices non représentées pour réaliser une liaison électrique 64 entre chaque lame conductrice 62 et une unité de traitement 66. Le support 60 est monté pivotant autour d'un axe XX' par rapport au boitier 12. Le lecteur de cartes comprend également un détecteur de carte 68 qui délivre un signal S lorsqu'une carte 42 arrive en position de traitement. Le détecteur 68 ne constitue en aucun cas une butée mécanique. La rotation du support 60 est commandee par un moteur 70 par l'intermédiaire d'une transmission mécanique 72.

En l'absence de signal S délivre par le détecteur 68, le support 60 est en position relevée comme cela est montré sur la figure 2b. Lorsque le circuit de traitement 66 reçoit le signal S, correspondant à la présence d'une carte en position de traitement, il émet un signal vers le circuit de commande 74 du moteur 70. Le moteur 70 provoque l'abaissement du support 60 jusqu'à ce que les lames de contact flexibles 62 viennent en contact avec les plages de contact 46 de la carte. L'unité de traitement 66 peut alors échanger des signaux avec le circuit intégré de la carte, via les plages de contact 46. Lors de l'extraction de la carte, le moteur 70 commande le mouvement inverse du support 60 qui vient reprendre sa position relevée.

On comprend que ce mode de réalisation particulier présente l'avantage supplémentaire de protéger les contacts 62 de la tête de lecture. En effet, comme la tête de lecture est en position relevée, il est impossible, ou pour le moins très difficile, d'introduire un objet par le fente 44 pour essayer de détériorier les lames de contact 62.

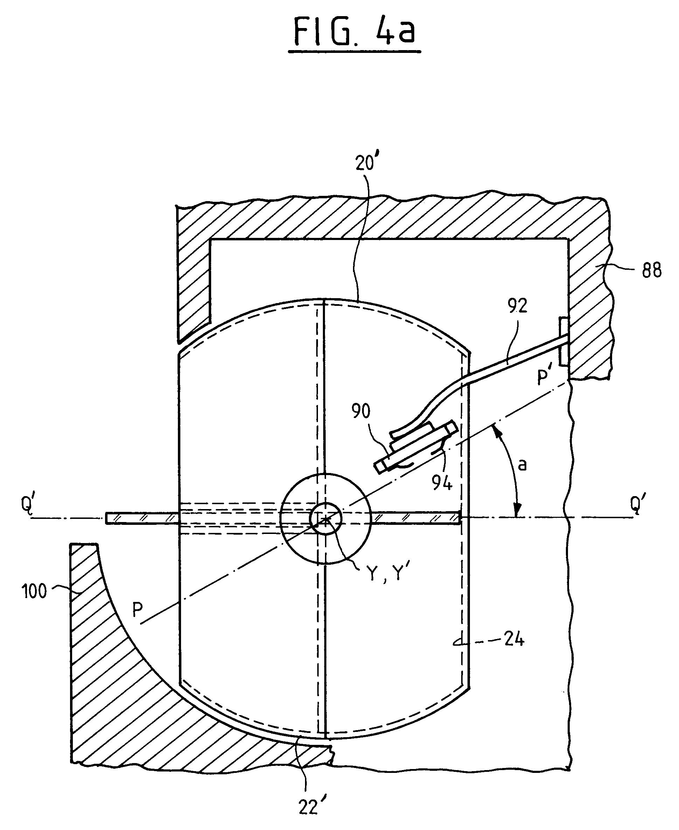

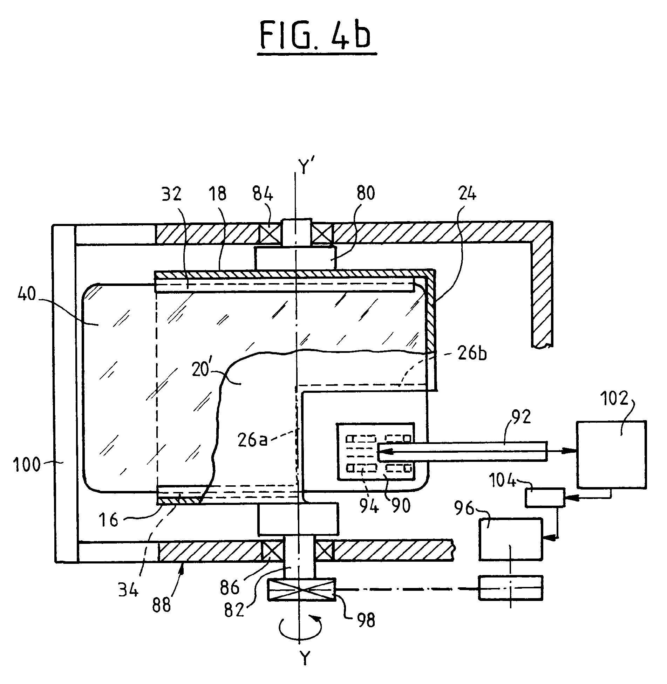

Les figures 4a et 4b montrent un deuxième mode de réalisation du lecteur de cartes. Ce mode de réalisation présente tous les avantages de celui des figures 2a et 2b. La différence essentielle réside dans le fait que, au lieu que le boitier soit fixe et la tête de lecture mobile, c'est le boitier et donc la carte qui est mobile et la tête de lecture fixe et solidaire d'un support.

Le boitier 12' du lecteur de carte est identique au boitier 12 de la figure 1 à l'exception des parois supérieure 20' et inférieure 22' qui sont des portions de surfaces cylindriques d'axe Y, Y'.

Les faces externes des parois latérales 16 et 18 sont munies d'axes 80 et 82 qui sont montés tourillonnant dans des paliers butées 84 et 86 solidaires d'une pièce support fixe 88. Les axes 80 et 82 sont disposés selon l'axe géométrique Y, Y'. Les paliers butées 84 et 86 maintiennent le boitier 10 sensiblement immobile en translation selon la direction Y, Y'. La tête de lecture 90 est fixée à l'extrémité d'un bras fixe 92, lui-même solidaire de la pièce support 88. La tête de lecture 90 est supportée de telle manière que le plan moyen P-P' de ses lames de contact élastiques 94 fasse un angle a avec le plan Q Q' d'introduction de la carte 42 défini par les glissières 32 et 34, lorsque le boitier 10 est au repos. La rotation du boitier 10 autour de l'axe Y Y' est commandée par un moteur 96 relié cinématiquement à un poulie 98 solidaire de l'axe 82. Enfin la pièce support 88 comporte une partie formant volet 100. Lorsque le boitier 10 est au repos (figure 4a) le volet 100 n'obture que la partie inférieure de l'ouverture frontale 18 du boitier. La carte 42 peut donc être introduite dans les glissières 32 et 34. Lorsque la carte arrive en butée sur la paroi postérieure 24 le circuit de traitement 102 envoie un signal au circuit de commande 104 et le moteur 96 provoque la rotation du boitier 10 autour de l'axe Y, Y' jusqu'à ce que le plan Q Q' vienne se confondre avec le plan P P'. Dans cette position les plages de contact 46 de la carte sont en contact électrique avec les contacts 94 de la tête de lecture 90. En outre, il est impossible d'extraire la carte du boitier du fait de la présence du volet 100.

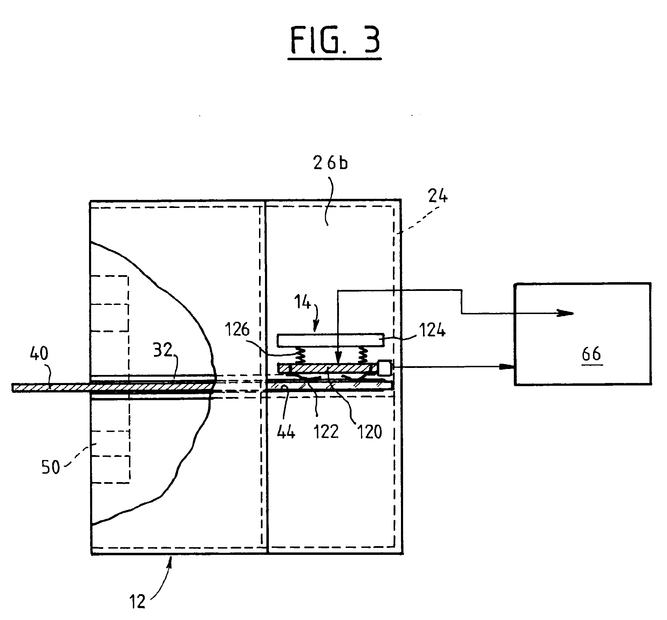

La figure 3 montre un mode simplifié de réalisation du lecteur de cartes. Le boitier 12 est identique en tout point à celui des figures 1 et 2a 2b. La différence réside dans la tête de lecture 14 qui est sensiblement fixe. La tête de lecture comprend un support isolant 120 sur lequel sont fixées les lames élastiques conductrices 122. Le support 120 est relie à un bras support 124 solidaire du boitier 12 par un système élastique 126. Ainsi lorsque la carte est en position de traitement, la pression des lames élastiques 122 sur les plages de contact 48 est suffisante pour assurer une bonne connexion électrique entre la carte et le lecteur de cartes.

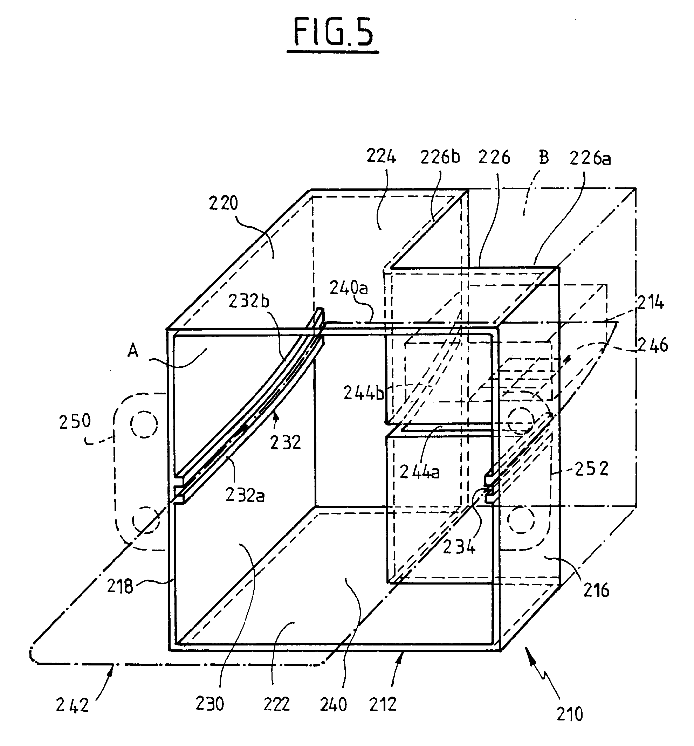

La figure 5 montre la structure générale d'un lecteur de cartes 210 selon un troisième mode de mise en oeuvre de l'invention. Le lecteur 210 comprend un boitier 212 et une tête de lecture/écriture 214 représentée schématiquement en pointilles sur la figure 5. Le boitier 212 comprend deux parois latérales 216 et 218, verticales sur la figure 5, une paroi supérieure 220 et une paroi inférieure 222, et une paroi postérieure 224. Le boitier 212 comprend encore une cloison 226 verticale sur la figure 5, qui s'étend de la paroi supérieure 220 à la paroi inférieure 222. La cloison 226 a, en coupe horizontale, la forme d'un L. La cloison 226 est ainsi formée par deux demi-cloisons 226a, raccordée à la paroi latérale 216, et 226b, raccordée à la paroi postérieure 224. Les bords avant des parois 216, 218, 220 et 222 limitent une ouverture frontale 230 de forme rectangulaire.

La cloison 226 sépare l'intérieur du boitier 212 en deux régions : une région avant A qui prolonge l'ouverture frontale 230 et une région arrière B qui ne communique pas avec l'ouverture 230. Comme le montre la figure 5, la paroi latérale 216 et la paroi postérieure 224 ne se prolongent pas au delà de la cloison 226. Il en va de même des parois supérieure et inférieure 224 et 222. Ainsi la région B n'est limitée que par les cloisons 226a et 226b. On a représenté en traits mixtes les prolongements "fictifs" des parois 224 et 216 dans la région B.

Si l'on revient à la région A, on voit que les faces internes des parois latérales 216 et 218 sont munies de glissières 232 et 234. La glissière 234 et la partie frontale 232a de la glissière 232 sont disposées dans un même plan horizontal. En revanche la partie arrière 232b de la glissière 232 est incurvée en allant en s'éloignant de la paroi inférieure 222 lorsqu'on se déplace vers la paroi postérieure 224. Comme le montre la figure 5, les glissières 232 et 234 servent à guider le corps 240 d'une carte à mémoire électronique 242. Les cloisons 226a et 226b sont munies d'une fente 244. La portion 244a de la fente 244 ménagée dans la cloison 226a est horizontale et disposée dans le même plan que la glissière 234 et la portion 232a de la glissière 232. La portion 244b de la fente 244 ménagée dans la cloison 226b est incurvée avec la même courbure que la portion 232b de glissière. Ainsi la portion de glissière 232b et la fente 244b définissent une portion de surface cylindrique à génératrices horizontales. La fente 244 a une hauteur légèrement supérieure à l'épaisseur $e$ du corps de carte. Comme cela est bien connu, la carte est munie de plages de contact électrique 246. Il y en a huit sur la figure 1. Les plages de contact 246 sont disposées dans un "coin" du corps de carte 240. La tête de lecture 214, qui sera décrite plus en détails ultérieurement est disposée dans la région B. Enfin le boitier 212 comporte deux oreilles 250 et 252 pour la fixation du boitier 212 sur la machine dont fait partie le lecteur.

Lorsqu'un usager veut utiliser la machine qui est équipée du lecteur de cartes 210, il introduit sa carte 242 dans les glissières 232 et 234 par l'ouverture frontale 230, les plages de contact 246 étant disposées en avant et dans la face supérieure du corps de carte 240. L'usager pousse la carte 242 qui est guidée par les glissières 232 et 234. L'extrémité droit du corps de carte pénètre dans la fente 244 de la cloison 226. La carte est poussée jusqu'à ce que son bord avant 240a arrive en butée sur la paroi postérieure 224. Dans cette situation, la carte est en position de traitement.

Lorsque l'extrémité avant du corps de carte 240 pénètre dans la partie incurvée 232b de la glissière 232 et dans la fente 244b, ces deux éléments de guidage imposent à la partie avant du corps de carte c'est à dire à celle qui porte les plages de contact 246, une courbure. Cette courbure tend à plaquer les plages de contact 246 contre la tête de lecture 214, et à rigidifier cette partie de la carte, ce qui améliore encore la qualité du contact électrique entre la carte et la tête de lecture/écriture.

Il faut remarquer que la portion du corps de carte qui comporte les plages de contact électrique est située dans la région B du boitier où se trouve la tête de lecture. Cette partie de la carte est bien maintenue en position dans la direction verticale par les lèvres de la fente 244. Il est avantageux de prévoir que les demi-cloisons 226a et 226b soient proches de la périphérie des plages de contact électrique pour assurer un meilleur maintien.

L'examen de la figure 5 montre que le lecteur est insensible aux actes de vandalisme consistant à introduire un objet dans le lecteur pour empêcher l'introduction ultérieure d'une carte à mémoire. En effet, tout objet dont une partie est située dans la région avant A peut aisément être extrait du lecteur par l'utilisateur du fait que la distance séparant les parois supérieure 220 et inférieure 222 est suffisante pour pouvoir en extraire tout objet. Si l'on tente d'introduire un objet dans la région B, cet objet sera automatiquement éjecté lors de l'introduction d'une carte normale puisque la région B ne comporte ni fond, ni butée mécanique dans la direction d'introduction de la carte.

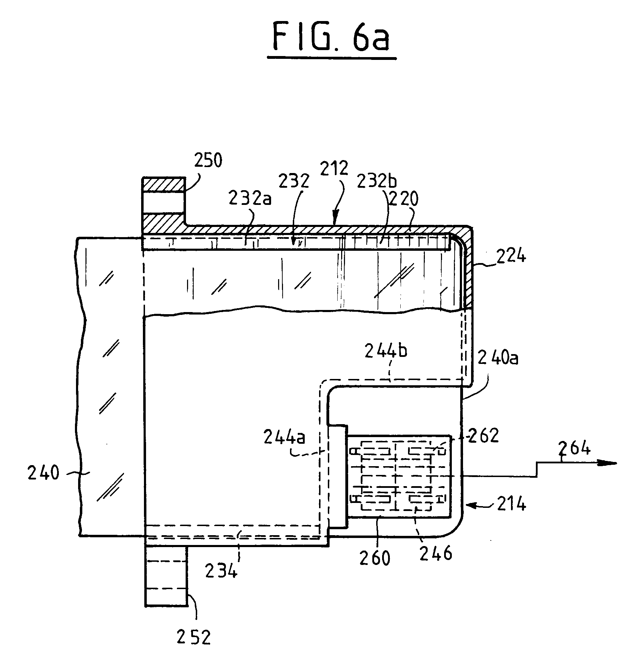

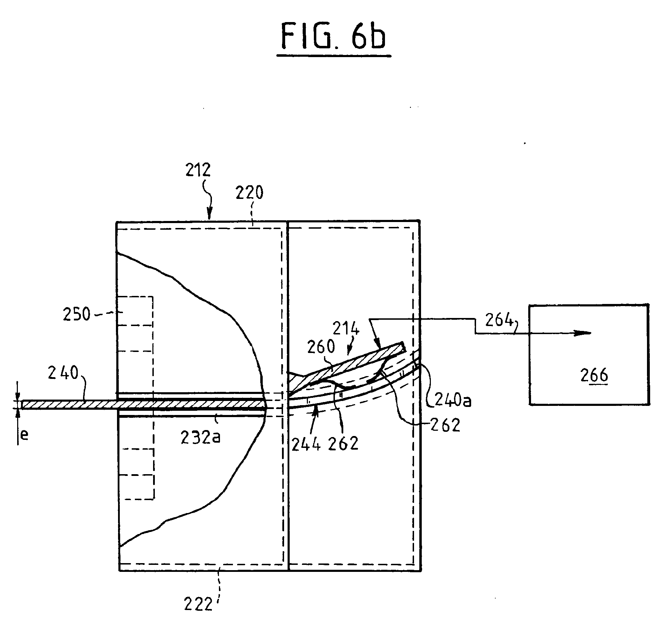

Les figures 6a et 6b reprennent le lecteur de cartes de la figure 5 mais en précisant la structure de la tête de lecture 214 qui est disposée dans la région arrière B du boitier 212. La tête de lecture 214 est formée par un support isolant 260 sur lequel sont montées des lames élastiques conductrices telles que 262. Le nombre de ces lames 262 est égal au nombre de plages de contact électrique 246 et leurs extrémités libres présentent la même géométrie que les plages de contact. Sur le support isolant 260 sont réalisées des pistes conductrices non représentées pour réaliser une liaison électrique 264 entre chaque lame conductrice 262 et une unité de traitement 266. Le support 260 est incliné par rapport à l'horizontale de telle manière qu'il soit sensiblement parallèle à la partie du corps de carte 244 qui porte les plages de contact 246. On comprend que ce mode de réalisation particulier présente l'avantage supplémentaire de protéger les contacts 262 de la tête de lecture. En effet, comme la tête de lecture est en position inclinée derrière la cloison 226, il est impossible, ou pour le moins très difficile, d'introduire un objet par le fente 244 pour essayer de détériorer les lames de contact 262.

## Revendications

1. Dispositif de lecture/écriture pour des cartes à mémoire électronique (42, 242) comprenant un corps de carte (40, 240) et des plages de contact électrique (46, 246) disposées dans une des faces principales dudit corps de carte, ledit dispositif comprenant un boîtier (12, 212) muni d'une ouverture frontale (30, 230) pour permettre l'introduction de ladite carte dans ledit boîtier ; une tête de lecture/écriture (14, 214) comprenant des éléments de connexion disposée à l'intérieur dudit boîtier ; des moyens de guidage de ladite carte pour guider celle-ci entre ladite ouverture frontale et une position de traitement dans laquelle lesdites plages de contact sont aptes à entrer en contact avec lesdits éléments de connexion de ladite tête de lecture/écriture ; caractérisé en ce qu'il comporte en outre : une cloison (26, 226) du boîtier, ayant en coupe horizontale (44, 244) une forme présentant au moins une partie non perpendiculaire à la direction d'introduction de la carte, présentant une fente horizontale permettant de maintenir la portion dudit corps de carte comportant lesdites plages de contact lorsque ladite carte est en position de traitement, par quoi lesdites plages de contact sont appliquées contre lesdits éléments de connexion de la tête de lecture/écriture ; ladite tête de lecture étant disposée à l'extérieur du boîtier derrière ladite cloison (26, 226) suivant la direction d'introduction de la carte, l'ouverture frontale (30, 230) du boîtier ayant des dimensions telles que la région (A) devant la fente soit accessible par l'utilisateur et le passage d'un objet dans la région (B) derrière la fente n'étant obstrué par aucune butée mécanique.

2. Dispositif de lecture/écriture selon la revendication 1, caractérisé en ce que ladite cloison (26, 226) a, en coupe horizontale, la forme d'un L.

3. Dispositif de lecture/écriture selon la revendication 2, dans lequel ladite première région (A) du boîtier (12, 212) comprend des moyens (24, 224) formant butée mécanique pour ladite carte dans la direction d'introduction de celle-ci.

4. Dispositif de lecture/écriture selon l'une quelconque des revendications 1 à 3 caractérisé en ce que ladite cloison (26,226) est conformée pour que sensiblement seulement la portion du corps de carte (42,242) comportant lesdites plages de contact électrique (46,246) soit disposée dans ladite deuxième région (B) lorsque ladite carte est en position de traitement.

5. Dispositif de lecture/écriture selon l'une quelconque des revendications 1 à 4 caractérisé en ce que ladite première région (A) du boîtier (12,212) est limitée par deux parois latérales (16,216 ; 20,220) s'étendant selon la direction d'introduction de la carte, par une paroi postérieure (24,224) sensiblement perpendiculaire à la direction d'introduction de la carte et par ladite cloison (26,226) dont une partie au moins (26a, 226a) est disposée entre ladite paroi postérieure et ladite ouverture d'introduction (30,230), et en ce que lesdits moyens de guidage comprennent deux glissières, (32, 34, 232, 234) chaque glissière étant solidaire d'une des parois latérales, ladite fente (44,244) de la cloison étant disposée dans le plan défini par lesdites glissières.

6. Dispositif de lecture/écriture selon l'une quelconque des revendications 1 à 5, caractérisé en ce que ladite deuxième région (B) du boitier est seulement limitée par ladite cloison (26,226).

7. Dispositif selon l'une quelconque des revendications 1 à 6, caractérisé en ce que ladite cloison (26,226) comprend une première portion (26a, 226a) sensiblement parallèle à l'ouverture d'introduction de la carte (30,230), une deuxième portion (26b, 226b) sensiblement perpendiculaire à ladite ouverture.

8. Dispositif de lecture/écriture selon la revendication 1, caractérisé en ce qu'il comprend en outre des moyens (60, 70, 72) pour communiquer un mouvement relatif entre ledit boitier (12) et ladite tête de lecture écriture (14) entre une première position où ladite tête de lecture n'est pas apte à entrer en contact avec ladite carte, et une deuxième position où ladite tête de lecture/écriture est apte à entrer en contact avec ladite tête, lesdits moyens de déplacement n'étant commandés pour amener ladite tête dans ladite deuxième position que lorsque ladite carte est en position de traitement (68).

9. Dispositif de lecture/écriture selon la revendication 8, caratérisé en ce que ledit boitier est fixe et ladite tête de lecture/écriture est mobile.

10. Dispositif de lecture/écriture selon la revendication 8, dans lequel ladite tête de lecture/écriture est fixe et ledit boitier est monté à pivotement par rapport à un support fixe, entre une première position où ladite carte engagée dans ledit boitier n'est pas en contact avec ladite tête de lecture et une deuxième position où ladite carte est en contact avec ladite tête de lecture/écriture.

11. Dispositif selon la revendication 10, caractérisé en ce que ledit support comporte un élément qui obture au moins partiellement ladite ouverture frontale lorsque ledit boitier est dans ladite deuxième position.

12. Dispositif de lecture/écriture selon la revendication 2, caractérisé en ce que lesdits moyens de maintien comportent des moyens (232,234) pour provoquer une courbure de la portion du corps de carte (240) portant lesdites plages de contact électrique (246) par quoi lesdites plages de contact sont appliquées contre les éléments de connexion (262) de ladite tête de lecture/écriture (214) lorsque ladite carte (242) est en position de lecture.

13. Dispositif selon la revendication 12, caractérisé en ce que lesdits moyens pour imposer une courbure audit corps de carte comprennent une portion de glissière (232b,) présentant une courbure et une partie de ladite fente (244b) également courbe et disposée sensiblement selon la direction d'introduction, ladite portion de glissière et ladite partie de fente définissant une portion de surface cylindrique dont les génératrices sont parallèles au plan d'introduction de la carte.

**Patentansprüche**

1. Schreib-/Leseeinrichtung für elektronische Speicherkarten (42, 242) mit einem Kartenkörper (40, 240) und auf den Hauptseiten des Kartenkörpers angeordneten elektrischen Kontaktbereichen (46, 246), wobei die Einrichtung versehen ist mit einem Gehäuse (12, 212) mit einer vorderen Öffnung (30, 230), damit die Karte in das Gehäuse eingeführt werden kann; einem Schreib-/Lesekopf (14, 214) mit im Inneren des Gehäuses angeordneten Verbindungselementen; Kartenführungsmitteln zum Führen dieser Karte zwischen der vorderen Öffnung und einer Bearbeitungsposition, in der die Kontaktbereiche mit den Verbindungselementen des Schreib-/Lesekopfs in Kontakt gelangen können; dadurch gekennzeichnet, daß sie außerdem eine Trennwand (26, 226) des Gehäuses aufweist, die im horizontalen Schnitt eine Form mit wenigstens einem zur Einführungsrichtung der Karte nicht senkrechten Teil besitzt und einen horizontalen Schlitz aufweist, der den die Kontaktbereiche aufweisenden Teil des Kartenkörpers zu halten ermöglicht, wenn sich die Karte in der Bearbeitungsposition befindet, in der die Kontaktbereiche gegen die Verbindungselemente des Schreib-/Lesekopfes gedrückt werden; wobei der Lesekopf außerhalb des Gehäuses in Einführungsrichtung der Karte hinter der Trennwand (26, 226) angeordnet ist, wobei die vordere Öffnung (30, 230) des Gehäuses Abmessungen besitzt, derart, daß der Bereich (A) vor dem Schlitz für den Benutzer zugänglich ist und wobei die Bewegung eines Gegenstandes in den Bereich (B) hinter dem Schlitz von keinerlei mechanischem Anschlag verhindert wird.

2. Schreib-/Leseeinrichtung gemäß Anspruch 1, dadurch gekennzeichnet, daß die Trennwand (26, 226) im horizontalen Schnitt die Form eines L besitzt.

3. Schreib-/Leseeinrichtung gemäß Anspruch 2, in der der erste Bereich (A) des Gehäuses (12, 212) Mittel (24, 224) umfaßt, die für die Karte in Richtung der Einführung derselben einen mechanischen Anschlag bilden.

4. Schreib-/Leseeinrichtung gemäß einem der Ansprüche 1 bis 3, dadurch gekennzeichnet, daß die Trennwand (26, 226) so beschaffen ist, daß im wesentlichen nur der die elektrischen Kontaktbereiche (46, 246) aufweisende Teil des Kartenkörpers (42, 242) im zweiten Bereich (B) angeordnet wird, wenn sich die Karte in der Bearbeitungsposition befindet.

5. Schreib-/Leseeinrichtung gemäß einem der Ansprüche 1 bis 4, dadurch gekennzeichnet, daß der erste Bereich (A) des Gehäuses (12, 212) durch zwei Seitenwände (16, 216; 20, 220), die sich in Einführungsrichtung der Karte erstrecken, durch eine zur Einführungsrichtung der Karte im wesentlichen senkrechte Rückwand (24, 224) und durch die Trennwand (26, 226), von der wenigstens ein Teil (26a, 226a) zwischen der Rückwand und der Einführungsöffnung (30, 230) angeordnet ist, begrenzt wird, und daß die Führungsmittel zwei Schienen (32, 34, 232, 234) aufweisen, von denen jede mit einer der Seitenwände einteilig ausgebildet ist, wobei der Schlitz (44, 244) der Trennwand in der durch die Schienen definierten Ebene angeordnet ist.

6. Schreib-/Leseeinrichtung gemäß einem der Ansprüche 1 bis 5, dadurch gekennzeichnet, daß der zweite Bereich (B) des Gehäuses nur durch die Trennwand (26, 226) begrenzt wird.

7. Schreib-/Leseeinrichtung gemäß einem der Ansprüche 1 bis 6, dadurch gekennzeichnet, daß die Trennwand (26, 226) einen ersten Abschnitt (26a, 226a), der zur Einführungsöffnung der Karte (30, 230) im wesentlichen parallel ist, und einen zweiten Abschnitt (26b, 226b), der zu dieser Öffnung im wesentlichen senkrecht ist, umfaßt.

8. Schreib-/Leseeinrichtung gemäß Anspruch 1, dadurch gekennzeichnet, daß sie außerdem Mittel (60, 70, 72) zum Erteilen einer Relativbewegung zwischen dem Gehäuse (12) und dem Schreib-/Lesekopf (14) zwischen einer ersten Position, in der der Schreib-/Lesekopf mit der Karte nicht in Kontakt treten kann, und einer zweiten Position, in der der Schreib-/Lesekopf mit der Karte in Kontakt treten kann, umfaßt, wobei die Verschiebungsmittel nur dann angesteuert werden, um den Kopf in der zweiten Position anzuordnen, wenn sich die Karte in der Bearbeitungsposition (68) befindet.

9. Schreib-/Leseeinrichtung gemäß Anspruch 8, dadurch gekennzeichnet, daß das Gehäuse unbeweglich und der Schreib-/Lesekopf beweglich ist.

10. Schreib-/Leseeinrichtung gemäß Anspruch 8, in der der Schreib-/Lesekopf unbeweglich ist und das Gehäuse in bezug auf eine feste Halterung zwischen einer ersten Position, in der die mit dem Gehäuse in Eingriff befindliche Karte mit dem Schreib-/Lesekopf nicht in Kontakt ist, und einer zweiten Position, in der die Karte mit dem Schreib-/Lesekopf in Kontakt ist, schwenkbar angebracht ist.

11. Schreib-/Leseeinrichtung gemäß Anspruch 10, dadurch gekennzeichnet, daß die Halterung ein Element aufweist, das die vordere Öffnung wenigstens teilweise verschließt, wenn sich das Gehäuse in der zweiten Position befindet.

12. Schreib-/Leseeinrichtung gemäß Anspruch 2, dadurch gekennzeichnet, daß die Haltemittel Mittel (232, 234) aufweisen, die eine Biegung des die elektrischen Kontaktbereiche (246) tragenden Teils des Kartenkörpers (240) hervorrufen, wodurch die Kontaktbereiche gegen die Verbindungselemente (262) des Schreib-/Lesekopfes (214) gedrückt werden, wenn sich die Karte (242) in der Leseposition befindet.

13. Schreib-/Leseeinrichtung gemäß Anspruch 12, dadurch gekennzeichnet, daß die Mittel, die bei dem Kartenkörper eine Biegung bewirken, einen Schienenabschnitt (232b) mit einer Krümmung und einen Teil des Schlitzes (244b), der ebenfalls gekrümmt ist und im wesentlichen in Einführungsrichtung angeordnet ist, umfassen, wobei der Schienenabschnitt und der Schlitzteil einen Abschnitt einer Zylinderoberfläche definieren, deren Erzeugende zur Einführungsebene der Karte parallel sind.

## Claims

1. Read/write device for electronic memory cards (42, 242) comprising a card body (40, 240) and electrical contact tabs (46, 246) disposed in one of the main faces of the said card body, the said device comprising a housing (12, 212) provided with a front opening (30, 230) for the insertion of the said card into the said housing, a read/write head (14, 214) comprising connecting elements disposed in the interior of the said housing, guide means for the said card in order to guide the latter between the said front opening and a processing position in which the said contact tabs are capable of coming into contact with the said connecting elements of the said read/write head, characterised in that it moreover comprises a partition (26, 226) of the housing having a horizontal sectional shape (44, 244) having at least one part not perpendicular to the direction of insertion of the card, having a horizontal slot for holding the portion of the said card body having the said contact tabs when the said card is in, the processing position, by which means the said contact tabs are pressed against the said connecting elements of the read/write head, the said read head being disposed outside the housing behind the said partition (26, 226) in the direction of insertion of the card, the front opening (30, 230) of the housing having dimensions such that the region (A) in front of the slot is accessible to the user and no mechanical stops preventing the passage of an object in the region (B) behind the slot.

2. Read/write device according to claim 1, characterised in that the said partition (26, 226) has an L-shaped horizontal section.

3. Read/write device according to claim 2, in which the said first region (A) of the housing (12, 212) comprises means (24, 224) forming a mechanical stop for the said card in the direction of insertion of the latter.

4. Read/write device according to any one of claims 1 to 3, characterised in that the said partition (26, 226) is designed so that substantially only the portion of the card body (42, 242) having the electrical contact tabs (46, 246) is disposed in the said second region (B) when the said card is in the processing position.

5. Read/write device according to any one of claims 1 to 4, characterised in that the said first region (A) of the housing (12, 212) is defined by two lateral walls (16, 216; 20, 220) extending in the direction of insertion of the card, by a rear wall (24, 224) substantially perpendicular to the direction of insertion of the card and by the said partition (26, 226), at least part (26a, 226a) of which is disposed between the said rear wall and the said insertion opening (30, 230) and that the said guide means comprise two guides (32, 34, 232, 234), each guide being fixed to one of the lateral walls, the said slot (44, 244) of the partition being disposed in the plane defined by the said guides.

6. Read/write device according to any one of claims 1 to 5, characterised in that the said second region (B) of the housing is defined only by the said partition (26, 226).

7. Device according to any one of claims 1 to 6, characterised in that the said partition (26, 226) comprises a first portion (26a, 226a) substantially parallel to the insertion opening for the card (30, 230), and a second portion (26b, 226b) substantially perpendicular to the said opening.

8. Read/write device according to claim 1, characterised in that it moreover comprises means (60, 70, 72) for imparting a relative movement between the said housing (12) and the said read/write head (14) between a first position in which the said read head is not capable of coming into contact with the said card and a second position in which the said read/write head is capable of coming into contact with the said head, the said displacement means only bringing the said head into the said second position when the said card is in the processing position (68).

**EP 0 287 417 B1**

9. Read/write device according to claim 8, characterised in that the said housing is stationary and the said read/write head is movable.

10. Read/write device according to claim 8, in which the said read/write head is stationary and the said housing is mounted to pivot relative to a stationary support between a first position in which the said card, engaged in the said housing, is not in contact with the said read head and a second position in which the said card is in contact with the said read/write head.

11. Device according to claim 10, characterised in that the said support comprises an element which at least partially covers the said front opening when the said housing is in the said second position.

12. Read/write device according to claim 2, characterised in that the said holding means comprise means (232, 234) for curving the portion of the card body (240) carrying the said electrical contact tabs (246) by which means the said contact tabs are pressed against the connecting elements (262) of the said read/write head (214) when the said card (242) is in the reading position.

13. Device according to claim 12, characterised in that the said means for imposing a curvature upon the said card body comprise a guide portion (232b) having a curvature and a part of the said slot (244b) which is also curved and is disposed substantially in the direction of insertion, the said guide portion and the said slot part defining a cylindrical surface portion, the generatrices of which are parallel to the plane of insertion of the card.

# FIG. 1

# FIG. 2a

# FIG.2b

# FIG. 3

# FIG. 4a

# FIG. 4b

# FIG.5

# FIG. 6a

# FIG. 6b